# EUROPÄISCHE PATENTSCHRIFT

(11) **EP 0 580 963 B1**
(45) Veröffentlichungstag und Bekanntmachung des Hinweises auf die Patenterteilung: **17.07.1996**
(21) Anmeldenummer: 93106283.0
(22) Anmeldetag: 17.04.1993
(51) Int. Cl.: F16L 27/10

(54) **Rohrgelenk**
Articulated pipe
Conduite articulée

(30) Priorität: 27.07.1992 DE 4224745
(43) Veröffentlichungstag der Anmeldung: 02.02.1994
(73) Patentinhaber: Witzenmann GmbH Metallschlauch-Fabrik Pforzheim, D-75175 Pforzheim (DE)
(72) Erfinder: Winzen, Wilfried, Dr., W-7530 Pforzheim (DE)
(74) Vertreter: Lemcke, Rupert, Dipl.-Ing.

(56) Entgegenhaltungen:
- EP-A- 0 208 128
- EP-A- 0 398 086
- US-A- 3 652 108

## Beschreibung

Die Erfindung geht von einem Rohrgelenk gemäß dem Oberbegriff des Anspruchs 1 aus.

Ein derartiges Rohrgelenk ist durch die europäische Patentschrift 0 203 128 B1 bekannt. Diese Ausführung erlaubt eine begrenzte axiale, angulare und laterale Bewegung der an das Gelenk angeschlossenen Rohrleitungsteile zueinander. Die axiale Beweglichkeit wird durch die Elastizität der Ringpolster begrenzt. Durch den dann eintretenden Kraftschluß zwischen dem inneren Gelenkrohr und der Manschette ist diese Anordnung insbesondere bei Kraftfahrzeugen als kraftschlüssiges Koppelglied zwischen Motor und Abgasanlage geeignet, und sie kann neben ihrer Funktion als tragendes Bauteil die beim Beschleunigen und beim Bremsen auftretenden Trägheitskräfte übertragen.

Die bekannte Ausbildung eines Rohrgelenks erlaubt nur eine begrenzte angulare Bewegung. Diese kann für Rohrleitungen bis zu einem gewissen Durchmesser ausreichend sein. Mit größer werdendem Durchmesser wird der Schwenkwinkel mit der Vergrößerung des Halbmessers immer kleiner.

Die Aufgabe der Erfindung besteht daher darin, ein Rohrgelenk zu schaffen, das insbesondere auch bei größeren Durchmessern die gewünschte angulare Beweglichkeit gewährleistet, wobei die kraftschlüssige Verbindung erhalten bleibt.

Diese Aufgabe wird durch die im Anspruch 1 angegebenen Merkmale gelöst. Die Unteransprüche zeigen vorteilhafte Ausgestaltungen des Erfindungsgegenstandes auf.

Die durch die Erfindung erzielten Vorteile bestehen insbesondere darin, daß der angulare Bewegungsspielraum durch zwei oder mehrere Gelenkbereiche vergrößert wird, ohne auf den Kraftschluß zu verzichten.

Anhand von zwei Ausführungsbeispielen wird die Erfindung in Verbindung mit den Zeichnungen nachfolgend näher erläutert. Es zeigt:
- Fig.1: ein erstes Ausführungsbeispiel eines Rohrgelenkes gemäß der Erfindung in Prinzipdarstellung und im Längsschnitt.
- Fig.2: ein zweites Ausführungsbeispiel eines Rohrgelenkes gemäß der Erfindung in Prinzipdarstellung und im Längsschnitt.
- Fig.3a und 3b: mehrgelenkige Ausführungen eines Rohrgelenkes gemäß Fig.1 bzw. Fig.2 in Prinzipdarstellung.

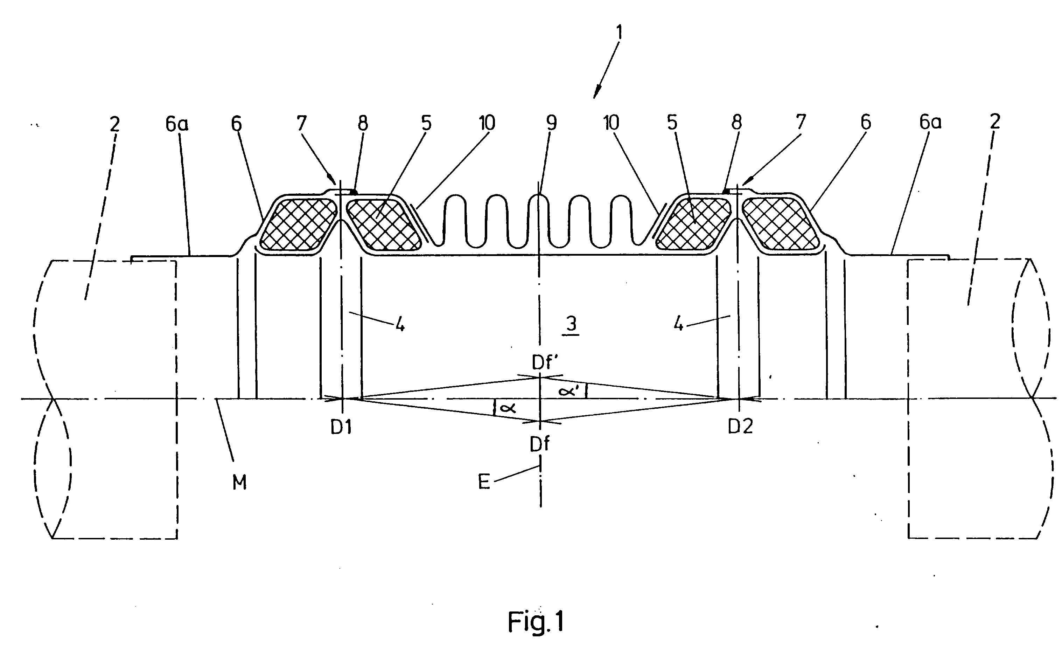

Fig.1 zeigt ein erstes Ausführungsbeispiel eines Rohrgelenks 1 in Prinzipdarstellung und Längsschnitt. Die Schnittdarstellung ist auf die obere Hälfte des Rohrgelenks 1 beschränkt, da diese zum Verständnis des Erfindungsgegenstandes ausreichend ist. Das Rohrgelenk 1 verbindet zwei strichliniert dargestellte Rohrleitungsteile 2. Als tragendes Element ist ein inneres Gelenkrohr 3 vorgesehen. An den Enden hat das Gelenkrohr 3 je eine ringförmige Auffaltung 4, deren Abstand zum Rohrende gleich der axialen Abmessung von Ringpolstern 5 ist. An den Flanken der Auffaltungen 4 liegen Ringpolster 5 an, die formschlüssig von ringförmigen Manschetten 6 umfaßt werden. Die Manschetten bestehen gemäß der älteren deutschen Patentanmeldung P 42 20 789.4 aus zwei Teilen, die in einem Überlappungsbereich 7 Übereinandergreifen. Die beiden Teile der Manschette 6 werden in axialer Richtung mit einer, der geforderten Vorspannung für die Ringpolster 5 entsprechenden Kraft zusammengepreßt und anschließend miteinander verschweißt (Schweißnaht 8). Jede Manschette 6 hat einen Rohransatz 6a. Im eingebauten Zustand des Rohrgelenkes 1 greifen die Rohransätze 6a über die Rohrleitungsteile 2, mit denen sie gasdicht verbunden sind. Zwischen den beiden Gelenkbereichen ist ein Dichtungsbalg 9 vorgesehen, der im Bereich 10 mit den Manschetten 6, z.B. durch Verschweißen, gasdicht verbunden ist und verhindert, daß durch die vorzugsweise porösen Ringpolster 5 hindurchtretende Gase nach außen gelangen.

Das vorbeschriebene Rohrgelenk 1 hat zwei Schwenkbereiche und somit zwei auf der Mittelachse M liegende reale Drehpunkte D1 und D2. Aus letzterem ergibt sich ein fiktiver Drehpunkt Df/Df', der sich im Bereich des maximalen Schwenkwinkels α/α' auf einer Ebene E quer zur Mittelachse M bewegt. Die Ebene E verläuft durch die Mitte des Dichtungsbalges 9. Damit ist gewährleistet, daß beide Balghälften optimal an der Bewegung teilnehmen und dadurch die höchste Lebensdauer erreicht wird.

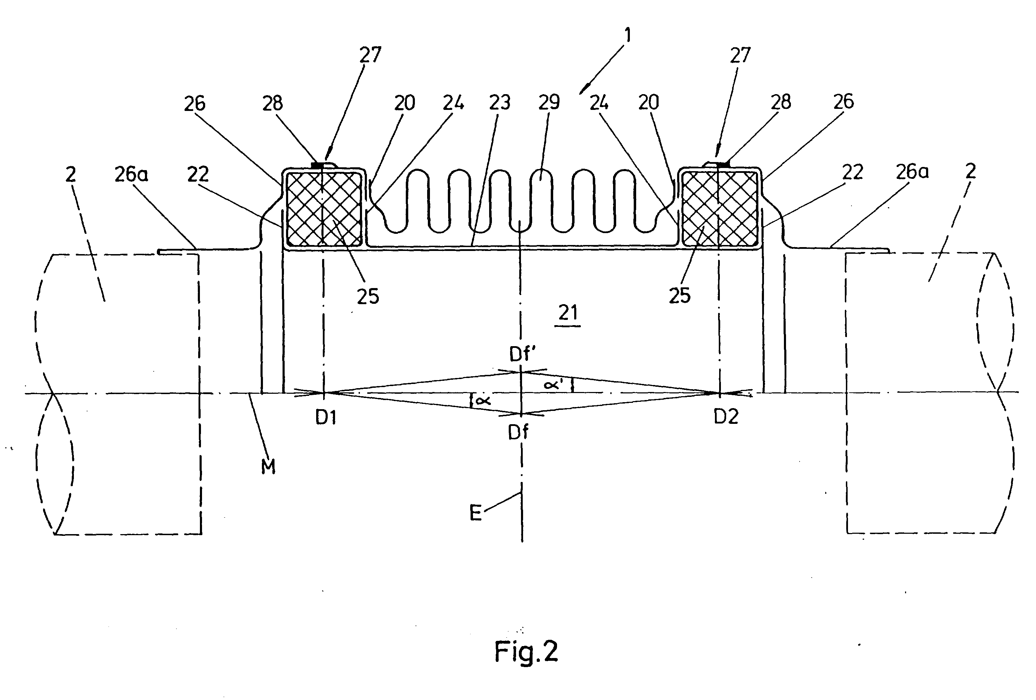

Fig.2 zeigt ein zweites Ausführungsbeispiel eines Rohrgelenks 1 in Prinzipdarstellung und Längsschnitt. Auch hier ist die Darstellung aus besagtem Grund auf die obere Hälfte des Rohrgelenks 1 beschränkt. Die Darstellung zeigt das zwischen zwei strichliniert gezeichneten Rohrleitungsteilen 2 montierte Rohrgelenk 1. Als tragendes Element ist auch hier ein inneres Gelenkrohr 21 vorgesehen. Die Enden des Gelenkrohres 21 sind zu Flanschen 22 aufgebördelt. Auf dem Gelenkrohr 21 befindet sich ein kürzeres Zwischenrohr 23, dessen Enden ebenfalls als Flansche 24 ausgebildet sind. Der Abstand zwischen den Flanschen 22 und 24 ist knapp der Breite von Ringpolstern 25, so daß diese im montierten Zustand fest zwischen den Flanschen 22 und 24 gehalten werden. Die Flansche 22 und 24 haben einen Durchmesser, der etwa zur Mitte der Ringpolster 25 reicht. Außen werden die Ringpolster 25 bis etwa zur Mitte von ringförmigen Manschetten 26 umschlossen, die - wie beim vorhergehenden Beispiel - aus zwei Teilen bestehen, die sich im Bereich 27 überlappen und gemäß der älteren deutschen Patentanmeldung P 42 20 789.4 zum Erzielen einer Vorspannung in den Ringpolstern 25 axial zusammengedrückt und anschließend durch Verschweißen (Schweißnaht 28) fest miteinander verbunden werden. Die Manschetten 26 schließen den Ringpolsterbereich nicht hermetisch ab. Durch das zumeist poröse Material der Ringpolster 25 können somit Gase nach außen gelangen. Dieses wird durch einen Dichtungsbalg 29 verhindert, der zwischen den beiden Gelenkbereichen angeordnet und in den Bereichen 20 gasdicht mit den Manschetten 26 verbunden ist. Die Manschetten 26 haben Rohransätze 26a, die im eingebauten Zustand des Rohrgelenkes 1 über Rohrleitungsteile 2 greifen und gasdicht mit letzteren verbunden sind.

Das vorbeschriebene Rohrgelenk 1 hat - wie beim ersten Beispiel gemäß Fig. 1 - zwei Schwenkbereiche und somit zwei auf der Mittelachse M liegende reale Drehpunkte D1 und D2. Aus letzteren ergibt sich ein fiktiver Drehpunkt Df/Df', der sich im Bereich des Schwenkwinkels α/α' auf einer Ebene E quer zur Mittelachse M bewegt. Die Ebene E verläuft durch die Mitte des Dichtungsbalges 9. Damit ist gewährleistet, daß beide Balghälften optimal an der Bewegung teilnehmen und dadurch die höchste Lebensdauer erreicht wird.

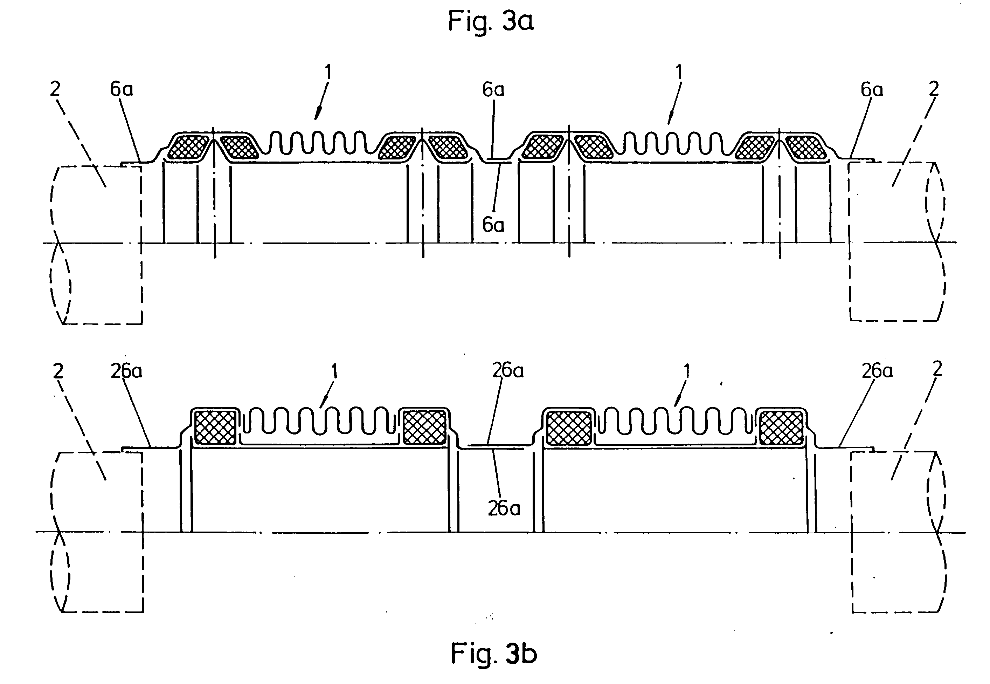

Die Fig.3a und 3b zeigen in Prinzipdarstellung zwei Rohrgelenke mit vierfachem Gelenkbereich. Fig.3a zeigt zwei Rohrgelenke 1 gemäß Fig.1, deren innere Rohransätze 6a so ausgebildet sind, daß sie ineinander passen. Sie bilden eine starre gasdichte Verbindung. Diese zwischen Rohrleitungsteilen 2 montierte Gelenkeinheit ist ein kraftschlüssiges Koppelglied mit einer doppelten angularen Beweglichkeit.

Fig.3b zeigt eine Gelenkeinheit, die aus zwei Rohrgelenken 1 gemäß Fig.2 besteht. Auch hier bilden die beiden Teile durch eine starre Verbindung über die inneren Rohransätze 26a ein kraftschlüssiges Koppelglied, das ebenfalls eine doppelte angulare Beweglichkeit gewährleistet.

Die Ringpolster 5 und 25 bestehen vorzugweise aus hitzebeständigen keramik- oder Metallfäden, die zu elastischen Ringen verpreßt sind. Eine besonders geeignete Ausführung der Ringpolster 5 und 25 sind Drahtpreßringe aus einem Drahtgestrick. Die Herstellung der Rohrgelenke läßt sich vereinfachen, wenn die Ringpolster 5 und 25 als Halbringe ausgebildet sind.

## Patentansprüche

1. Rohrgelenk (1) zur axialen, angularen und lateralen Schwingungsentkopplung von zwei miteinander benachbarten wenigstens indirekt miteinander gasdicht verbundenen Rohrleitungsteilen (2) mit einem innen angeordneten Gelenkrohr (3, 21), auf dem sich Ringpolster (5, 25) abstützen, die mit einer die Ringpolster (5, 25) von außen formschlüssig umfassenden und mit dem benachbarten Rohrleitungsteil (2) verbundenen Manschette (6, 26) einen Gelenkbereich bilden, und mit einem an die Manschette (6, 26) angeschlossenen und mit dem anderen Rohrleitungsteil (2) in dichter Verbindung stehenden Dichtungsbalg (9, 29),
dadurch gekennzeichnet,
daß das Rohrgelenk (1) in Axialrichtung nebeneinandergeschaltet zwei oder mehr Gelenkbereiche hat.

2. Rohrgelenk nach Anspruch 1,
dadurch gekennzeichnet,
daß das Gelenkrohr (3,21) an beiden Enden mit Mitteln zum Abstützen der Ringpolster versehen ist.

3. Rohrgelenk nach Anspruch 1,
dadurch gekennzeichnet,
daß die die Ringpolster (5,25) umfassenden Manschetten (6,26) durch einen Dichtungsbalg (9,29) miteinander verbunden sind, und daß die Manschetten (6,26) nach außen einen Rohransatz (6a,26a) zum Anschluß an die Rohrleitungsteile (2) haben.

4. Rohrgelenk nach Anspruch 2,
dadurch gekennzeichnet,
daß die Mittel zum Abstützen ringförmige Auf faltungen (4) sind, an denen beidseitig Ringpolster (5) anliegen.

5. Rohrgelenk nach Anspruch 2,
dadurch gekennzeichnet,
daß die Mittel zum Abstützen Ringflansche (22, 24) sind, zwischen denen Ringpolster (25) gefaßt sind.

6. Rohrgelenk nach Anspruch 5,
dadurch gekennzeichnet,
daß die inneren Ringflansche (24) die hochgebördelten Enden eines Zwischenrohres (23) sind, das auf das Gelenkrohr (21) aufgeschoben ist.

7. Rohrgelenk nach einem der vorhergehenden Ansprüchen mit mehr als zwei Gelenkbereichen,
dadurch gekennzeichnet,
daß mehrere Rohrgelenke (1) mit zwei Gelenkbereichen starr miteinander verbunden sind.

8. Rohrgelenk nach Anspruch 7,
dadurch gekennzeichnet,
daß die Rohrgelenke (1) durch Ineinandergreifen von Rohransätzen (6a,26) der Manschetten (6,26) starr miteinander verbunden sind.

9. Rohrgelenk nach Anspruch 1,
dadurch gekennzeichnet,
daß die Ringpolster (5,25) aus gepreßten Fäden aus Keramik oder Metall bestehen.

## Claims

1. A pipe articulation (1) for the decoupling of axial, angular and lateral vibrations of two mutually adjacent pipe duct parts (2) which are at least indirectly connected together in a gas-tight manner, with an internally arranged linkage pipe (3, 21), on which annular cushions (5, 25) take support said cushions together with a sleeve (6, 26) form an articulation region, the sleeve form-fittingly surrounding the annular cushions (5, 25) and being connected with the adjacent pipe duct part (2); and with a bellows seal (9, 29) adjoined to the sleeve (6, 26) and sealingly connected with the other pipe duct part (2)
characterised in that
the pipe articulation (1) has two or more articulation regions connected next to each other in the axial direction.

2. A pipe articulation according to claim 1
characterised in that
the linkage pipe (3, 21) is provided at both ends with means for supporting the annular cushions.

3. A pipe articulation according to claim 1,
characterised in that
the sleeves (6, 26) surrounding the annular cushions (5, 25) are connected together by means of a bellows seal (9, 29) and in that the sleeves (6, 26) have an outwardly pipe extension (6a, 26a) for coupling to the pipe duct parts (2).

4. A pipe articulation according to claim 2,
characterised in that
the means for supporting are annular folded-up parts (4) against which the annular cushions (5) bear on both sides.

5. A pipe articulation according to claim 2,
characterised in that
the means for supporting are annular flanges (22, 24) between which annular cushions (5) are held.

6. A pipe articulation according to claim 5,
characterised in that
the inner annular flanges (24) are the turned-up flanges ends the ends of an intermediate pipe (23) pushed up on the linkage pipe (21).

7. A pipe articulation according to any one of the preceding claims,
characterised in that
several linkage pipes (1) with two articulation regions are rigidly connected with each other.

8. A pipe articulation according to claim 7,
characterised in that
the linkage pipes (1) are rigidly connected with each other by engagement of pipe extensions (6a, 26a) of the sleeves (6, 26) into each other.

9. A pipe articulation according to claim 1,
characterised in that
the annular cushions (5, 25) consist of compressed ceramic or metallic fibres.

## Revendications

1. Articulation tubulaire (1) permettant le découplage axial, angulaire et latéral, du point de vue oscillations, de deux éléments de conduites tubulaires (2), qui sont voisins et reliés entre eux au moins indirectement d'une manière étanche au gaz, et comportant un tube d'articulation (3,21) disposé intérieurement et sur lequel prennent appui des rembourrages annulaires (5,25), qui forment une zone d'articulation, avec un manchon (6,26) entourant extérieurement selon une liaison par formes complémentaires les rembourrages annulaires (5,25) et relié à l'élément de conduite tubulaire voisin (2), et un soufflet d'étanchéité (9,29), qui est raccordé au manchon (6,26) et est relié de façon étanche à l'autre élément de conduite tubulaire (2), caractérisée en ce que l'articulation tubulaire (1) possède deux ou plusieurs zones d'articulation situées les unes à côté des autres dans la direction axiale.

2. Articulation tubulaire selon la revendication 1, caractérisée en ce que le tube de l'articulation (3,21) comporte, à ses deux extrémités, des moyens pour supporter le rembourrage annulaire.

3. Articulation tubulaire selon la revendication 1, caractérisée en ce que les manchons (6,26) entourant les rembourrages annulaires (5,25) sont reliés entre eux par un soufflet d'étanchéité (9,29), et que les manchons (6,26) possèdent, sur le côté extérieur, un embout saillant tubulaire (6a, 26a) pour le raccordement aux éléments de conduites tubulaires (2).

4. Articulation tubulaire selon la revendication 2, caractérisée en ce que les moyens sont des replis annulaires (4), contre lesquels s'appliquent, des deux côtés, des rembourrages annulaires (5).

5. Articulation tubulaire selon la revendication 2, caractérisée en ce que les moyens de support sont des brides annulaires (22,24), entre lesquelles sont retenus des rembourrages annulaires (25).

6. Articulation tubulaire selon la revendication 5, caractérisée en ce que les brides annulaires intérieures (24) sont les extrémités, pourvues d'un rebord surélevé, d'un tube intermédiaire (23) qui est emmanché sur le tube (21) de l'articulation.

7. Articulation tubulaire selon l'une des revendications précédentes, comportant plus de deux zones d'articulation, caractérisée en ce que plusieurs articulations tubulaires (1) sont reliées rigidement entre elles par deux zones d'articulation.

8. Articulation tubulaire selon la revendication 7, caractérisée en ce que les articulations tubulaires (1) sont reliées rigidement entre elles par emboîtement réciproque d'embouts saillants tubulaires (6a, 26) des manchons (6,26).

9. Articulation tubulaire selon la revendication 1, caractérisée en ce que les rembourrages annulaires (5,25) sont constitués par des fils serrés formés d'une céramique ou d'un métal.
